# EUROPÄISCHE PATENTSCHRIFT

(11) **EP 1 303 433 B1**
(45) Veröffentlichungstag und Bekanntmachung des Hinweises auf die Patenterteilung: **21.09.2005**
(21) Anmeldenummer: 01956292.5
(22) Anmeldetag: 23.06.2001
(51) Int. Cl.: B60T 8/00

(54) **VERFAHREN UND VORRICHTUNG ZUR STABILISIERUNG EINES STRASSENFAHRZEUGES**
METHOD AND DEVICE FOR STABILIZING A ROAD VEHICLE
PROCEDE ET DISPOSITIF POUR STABILISER UN VEHICULE ROUTIER

(30) Priorität: 13.07.2000 DE 10034222
(43) Veröffentlichungstag der Anmeldung: 23.04.2003
(73) Patentinhaber: ROBERT BOSCH GMBH, 70442 Stuttgart (DE)
(72) Erfinder: FREI, Werner, 90547 Stein (DE)
(86) Internationale Anmeldenummer: PCT/DE2001/002318
(87) Internationale Veröffentlichungsnummer: WO 2002/006101

(56) Entgegenhaltungen:
- EP-A- 0 989 049
- US-A- 6 042 196

## Beschreibung

### Stand der Technik

Die Erfindung betrifft ein Verfahren und eine Vorrichtung zur Stabilisierung eines Straßenfahrzeuges gemäß dem Oberbegriff des Anspruchs 1. Dabei geht es um das Problem, daß Gespanne - hierbei handelt es sich um eine Kombination aus einem Zugfahrzeug und einem Anhänger, wie sie im Bereich Personenkraftwagen oder Nutzfahrzeuge vorkommt -ins Schlingern kommen und Einknicken können. Das erfindungsgemäße Verfahren und die erfindungsgemäße Vorrichtung kann auch zum Stabilisieren von Einzelfahrzeugen, ebenfalls im Bereich Personenkraftwagen oder Nutzfahrzeuge, eingesetzt werden. In diesem Fall wird ein Schlingern des Einzelfahrzeuges verhindert.

Entsprechende Verfahren und Vorrichtungen sind aus dem Stand der Technik in vielerlei Modifikationen bekannt.

Zum einen ist seit geraumer Zeit die sogenannte Fahrdynamikregelung, zwischenzeitlich auch unter der Bezeichnung ESP bekannt, auf dem Markt. Das Kernstück dieser Fahrdynamikregelung bildet ein Drehratensensor. Durch die Regelung der Drehrate des Fahrzeuges um dessen Hochachse kann unter anderem ein Umkippen des Fahrzeuges vermieden werden.

Bzgl. der Fahrdynamikregelung für Einzelfahrzeuge sei auf die in der Automobiltechnischen Zeitschrift (ATZ) 96, 1994, Heft 11, auf den Seiten 674 bis 689 erschienene Veröffentlichung "FDR- Die Fahrdynamikregelung von Bosch" verwiesen. In dieser Veröffentlichung wird eine Vorrichtung zur Regelung der Gierrate des Fahrzeuges beschrieben. Hierzu wird die gemessene Gierrate mit einem Sollwert für die Gierrate verglichen. Bei diesem Vergleich wird eine Regelabweichung der Gierrate ermittelt, in deren Abhängigkeit fahrerunabhängige, radindividuelle Bremseneingriffe und/oder Motoreingriffe durchgeführt werden. Durch die fahrerunabhängigen Bremseneingriffe wird ein Giermoment auf das Fahrzeug aufgebracht, durch welches sich die Ist-Gierrate an den Sollwert annähert.

Bzgl. der Fahrdynamikregelung für Fahrzeuggespanne sei auf das SAE-Paper 973284 "Vehicle Dynamics Control for Commercial Vehicles" verwiesen. In dieser Veröffentlichung wird eine Fahrdynamikregelung für ein Fahrzeuggespann, welches aus einer Zugmaschine und einem Auflieger besteht, beschrieben. Als Regelgrößen werden hierfür die Gierrate und der Schwimmwinkel des Zugfahrzeuges und der sich zwischen Zugfahrzeug und Auflieger einstellende Knickwinkel verwendet. Die gemessenen Werte für diese Größen werden mit zugehörigen Sollwerten verglichen. In Abhängigkeit dieses Vergleiches werden Motoreingriffe und/oder Bremseneingriffe zur Stabilisierung des Fahrzeuggespannes durchgeführt.

Nachfolgend werden weitere einschlägige, zum Stand der Technik gehörende Verfahren und Vorrichtungen aufgeführt.

Aus der DE 195 36 620 A1 ist ein Verfahren zur Verbesserung der Querstabilität bei Kraftfahrzeugen bekannt. Das Kraftfahrzeug ist beispielsweise als ein Zugfahrzeug mit einem Anhänger ausgebildet. Es werden fahrzeugverzögernde Maßnahmen ergriffen, wenn die Amplitude einer querdynamischen, innerhalb eines vorgegebenen Frequenzbandes schwingenden Fahrzeuggröße einen vorgegebenen Grenzwert überschreitet. Bei den querdynamischen Fahrzeuggrößen handelt es sich um die Querbeschleunigung und die Gierwinkelgeschwindigkeit. Als Maßnahmen zur gFahrzeugverzögerung wird die Reduzierung des Drossleklappenöffnungswinkel zur Antriebsmomentenreduzierung und/oder die Einspeisung von Bremsdruck an den Kraftfahrzeugrädern zur Bremsmomentenerhöhung ergriffen. Zur Erkennung des für das Fahrzeug typischen Schwingungsverhaltens wird somit die Frequenz und die Amplitude einer querdynamischen Fahrzeuggröße ausgewertet.

Aus der DE 198 12 237 C1 ist ein Verfahren zur Regelung der Fahrdynamik eines Straßenfahrzeugs, welches als Sattelzug ausgebildet ist, bekannt. Hierzu werden fortlaufend aus einer Betrachtung des dynamischen Verhaltens eines Simulationsrechners eines implementierten Fahrzeugmodells Referenzgrößen für die Giergeschwindigkeit und den Schwimmwinkel des Fahrzeuges generiert. Aus einem Vergleich der Referenzgröße als Sollwert der Giergeschwindigkeit des Fahrzeuges mit mittels eines Giergeschwindigkeitssensors fortlaufend erfaßten Istwerten der Giergeschwindigkeit werden Ansteuersignale zu einer Abweichungen des jeweiligen Istwertes vom jeweils maßgeblichen Sollwert kompensatorisch beeinflussenden Aktivierung mindestens einer Radbremse des Fahrzeuges und/oder zur Reduzierung des Motorantriebsmoments erzeugt. Das Fahrzeugmodell ist durch ein lineares Differentialsystem dargestellt. Die Radbremsen des Zugfahrzeuges und die des Anhängers können einzeln oder zu mehreren, auch unabhängig davon, ob eine Betätigung der Bremsanlage vorliegt, aktiviert werden.

Die DE 198 10 642 A1 betrifft ein Verfahren zur Stabilisierung von Gespannen, die aus einem Zugfahrzeug und einem Anhänger oder Auflieger bestehen. Hierzu werden die Fahrdynamik des Gespannes beeinflussende Größen wie der Lenkradwinkel und/oder die Gierrate und/oder die Querbeschleunigung und/oder der Knickwinkel erfaßt und ausgewertet. Durch die Auswertung dieser Größen wird auf eine stabilitätskritische Fahrsituation geschlossen. Eine stabilitätskritische Fahrsituation liegt dann vor, wenn die Amplitude von Lenkwinkel und Gierrate und/oder Querbeschleunigung und/oder Knickwinkel vorgegebene Schwellenwerte über- und/oder unterschreitet. Ist dies der Fall, dann wird der Anhänger oder der Auflieger gesteuert abgebremst. Hierzu werden Drucksollwerte ausgegeben, die so gewählt sind, daß sie den Radbremsen des Anhängerfahrzeuges rad-, achs- oder seitenweise zugeordnet sind.

Aus der DE 198 43 826 A1 ist ein Verfahren zur Stabilisierung eines Anhängergespannes, das von einer Zugmaschine und mindestens einem mit der Zugmaschine über eine Kupplung verbundenen Anhänger gebildet wird, bekannt. Zur Unterdrückung bzw. zum Abbau von Schlingerbewegungen des Anhängers wird die Istgierbewegung der Zugmaschine bestimmt und mit einer Sollgierbewegung verglichen. Tritt eine Differenz zwischen der Sollgierbewegung und der Istgierbewegung auf, dann wird der Lenkwinkel der Räder einer lenkbaren Fahrzeugachse der Zugmaschine zum Abbau der Differenz verändert.

Die US 5,747,683 betrifft ein Verfahren zur Stabilisierung eines mehrteiligen Fahrzeuges. Der Stabilisierung liegt jeweils ein Vergleich von Istwert und Sollwert für die Gierrate, die Querbeschleunigung, der Druckdifferenz in den Federbalgen der Luftfederung, des Knickwinkels und der zeitlichen Änderung des Knickwinkels zugrunde.

Aus der GB 2 257 403 A ist ein System bekannt, mit dem eine aufkommende Instabilität eines Fahrzeuges angezeigt wird. Im Rahmen dieser Schlingererkennung wird die Frequenz und die Amplitude der ermittelten Querbeschleunigung ausgewertet. Die Frequenz des die Querbeschleunigung beschreibenden Signals wird anhand von Nulldurchgängen dieses Signals ermittelt. Liegt die Frequenz innerhalb eines vorgegebenen Bereiches und ist die Amplitude größer als ein vorgegebener Wert, so wird dieser Fahrzustand als Schlingern erkannt. In diesem Fall wird der Fahrer des Fahrzeuges gewarnt.

Die DE 197 08 144 A1 betrifft ein Verfahren zur Vermeidung von Pendelbewegungen der Deichsel eines Fahrzeuganhängers. Hierzu ist eine Meßvorrichtung vorgesehen, mit der eine der Deichselquerkraft oder dem Deichselweg entsprechende Meßgröße ermittelt wird. In Abhängigkeit des festgestellten Wertes der Meßgröße, d.h. in Abhängigkeit der Amplitude der Meßgröße, wird mit mindestens einer der Anhängerbremsen das zugehörige Rad derart gebremst, daß ein Zusatzdrehmoment an der Deichsel auftritt, welches dem in der Querkraft oder Querbewegung des Deichselendes resultierenden Drehmoment entgegenwirkt.

Die Offenlegungsschrift DE 23 10 854 betrifft ein Schwenksteuersystem für einen Anhänger. Hierzu wird die Winkelbeschleunigung des Anhängers gemessen. Erreicht die Winkelbeschleunigung eine vorgewählte Größe, dann wird die Bremse wenigstens eines Rades des Fahrzeuges betätigt. Dieser Veröffentlichung ist auch ein Hinweis dahingehend zu entnehmen, daß eine einzelne, individuelle Steuerung für jedes Rad in Abhängigkeit der Richtung der Anhängerschwingung möglich ist.

Die US 4,254,998 offenbart ein System zur Erkennung eines Anhängerschwingens und zur Bremsung des Anhängers bei einem erkannten Anhängerschwingen. Hierzu sind Mittel zur Erfassung einer oszillierenden Querbewegung des Anhängers vorgesehen. Ein Bremsbetätigungssignal wird dann erzeugt, wenn die Periodendauer der Schwingung innerhalb eines vorbestimten Wertebereiches liegt. Außerdem muß ein Signal, welches aus einem Signal, das eine Beschleunigung des Anhängers nach links und aus einem Signal, das eine Beschleunigung des Anhängers nach rechts beschreibt, besteht, einen vorgegebenen Amplitudenwert überschreiten.

Die US 3,948,544 beschreibt eine Vorrichtung, mit der eine an einem Anhänger auftretende Schaukelbewegung eliminiert werden kann. Hierzu weist der am Fahrzeug angebrachte Kupplungshaken, über den der Anhänger am Fahrzleug befestigt ist, Erfassungsmittel auf, mit denen die Amplitude und die Richtung der Querkraft am Kupplungshaken ermittelt wird. Durch die Erkennung, in welche Richtung der Anhänger schwingt, können die Bremsen des Anhängers seitenweise angesteuert werden.

Die EP-A-1 107 893 beschreibt ein Verfahren und eine Einrichtung zum Stabilisieren eines Straßenfahrzeugs, insbesondere eines Personenkraftwagens, mit einem durch das Straßenfahrzeug gezogenen Anhänger. Dabei wird das Straßenfahrzeug in Bezug auf Schlingerbewegungen überwacht. Beim Erkennen einer Schlingerbewegung wird dem Straßenfahrzeug automatisch ein Giermoment eingeprägt, welches der Schlingerbewegung im wesentlichen gegenphasig ist.

Vor diesem Hintergrund ergibt sich folgende Aufgabe: Es sollen bestehende Verfahren und Vorrichtungen zur Stabilisierung eines Straßenfahrzeuges dahingehend verbessert werden, daß eine vorhandene Schlingerbewegung des Straßenfahrzeuges wirksamer beseitigt, d.h. gedämpft wird.

Diese Aufgabe wird durch die Merkmale der unabhängigen Ansprüche gelöst.

### Vorteile der Erfindung

Das erfindungsgemäße Verfahren betrifft ein Verfahren zum Stabilisieren eines Straßenfahrzeugs. Insbesondere soll ein aus einem Zugfahrzeug und einem Anhänger bestehendes Fahrzeuggespann stabilisiert werden.

Erfindungsgemäß wird eine Signalgröße ermittelt, die den zeitlichen Verlauf der mit Hilfe eines Drehratensensors erfaßten Drehrate des Straßenfahrzeuges beschreibt. Vorteilhafterweise ist bei einem Fahrzeuggespann der Drehratensensor im Zugfahrzeug untergebracht. Ausgehend von der Signalgröße wird eine Amplitudengröße ermittelt, die die Amplitude der Signalgröße beschreibt. Außerdem wird eine Frequenzgröße ermittelt, die die Frequenz der Signalgröße beschreibt. In Abhängigkeit der Amplitudengröße und der Frequenzgröße wird ermittelt, ob eine Schlingerbewegung des Fahrzeugs vorliegt.

Erfindungsgemäß wird die wirksamere Beseitigung oder Dämpfung der vorhandenen Schlingerbewegung des Straßenfahrzeuges dadurch erreicht, daß eine Phasengröße ermittelt wird, die die Phase der Signalgröße beschreibt. Bei Vorliegen einer Schlingerbewegung wird dann in Abhängigkeit der Frequenzgröße und der Phasengröße ein Zeitpunkt ermittelt, zu dem ein phasenrichtiger Bremseneingriff oder Lenkungseingriffe zur Stabilisierung des Straßenfahrzeuges durchgeführt wird.

Vorteilhafterweise liegt die Schlingerbewegung des Straßenfahrzeuges dann vor, wenn der Wert der Frequenzgröße in einem vorgegebenen Wertebereich liegt oder größer als ein vorgegebener Wert ist und/oder wenn der Wert der Amplitudengröße größer als ein vorgegebener Wert ist. Sowohl der Wertebereich für die Frequenzgröße als auch der Wert für die Amplitudengröße können im Vorfeld durch Fahrversuche ermittelt werden.

Von besonderem Vorteil hat sich erwiesen, daß die Amplitudengröße, die Frequenzgröße und die Phasengröße aus der Signalgröße mit Hilfe einer Schwingungsfrequenzanalyse ermittelt wird.

Vorteilhafterweise werden bei einem Fahrzeuggespann, welches aus einem Zugfahrzeug und einem Anhänger besteht, die phasenrichtigen Bremseneingriffe an den Bremsen des Zugfahrzeuges durchgeführt. Die Bremen des Anhängers werden bei vorliegen einer Schlingerbewegung gleichmäßig gebremst. Da für den Anhänger auf die Durchführung einer phasenrichtigen Bremsung verzichtet wird, kann das erfindungsgemäße Verfahren bzw. die erfindungsgemäße Vorrichtung auch bei Fahrzeuggespannen eingesetzt werden, die einen Anhänger aufweisen, der mit einer konventionellen Bremsanlage, d.h. einer Druckluftbremsanlage, ausgestattet ist.

Weitere Vorteile sowie vorteilhafte Ausgestaltungen können den Unteransprüchen, der Zeichnung sowie der Beschreibung des Ausführungsbeispiels entnommen werden.

### Zeichnung

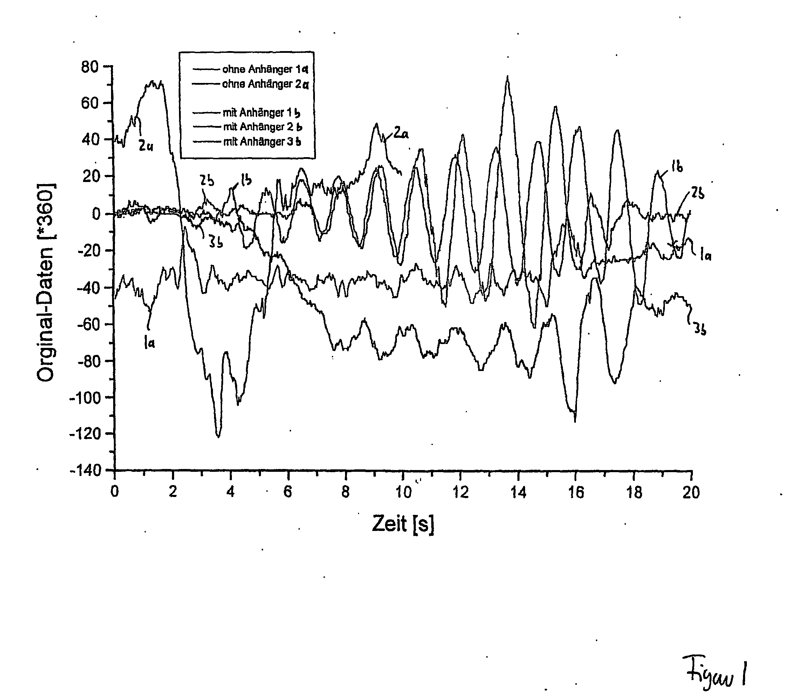

Die Zeichnung besteht aus den Figuren 1 bis 7. In diesen Figuren sind die zeitlichen Verläufe verschiedener Signale bzw. Größen dargestellt.

### Ausführungsbeispiel

Mit Hilfe des Drehratensensors wird die Schwingung, d.h. der zeitliche Verlauf der Drehrate des Fahrzeugs detektiert. Bei dem Fahrzeug kann es sich um ein Einzelfahrzeug oder um ein Fahrzeuggespann, welches aus einem Zugfahrzeug und einem Anhänger besteht, handeln.

Der Kern der erfindungsgemäßen Idee besteht darin, daß der zeitliche Verlauf des Signals des Drehratensensors analysiert. Hierzu wird in Echtzeit eine Schwingungsfrequenzanalyse durchgeführt. Unter der Annahme daß die Schlingerbewegung für gewöhnlich einer oszillierenden Bewegung entspricht, die im Idealfall durch eine Sinusschwingung beschreiben werden kann, erhält man bei der Analyse die Frequenz, die Amplitude und die Phase als Stellgröße. D.h. es werden ausgehend von einer Signalgröße, die den zeitlichen Verlauf der mit Hilfe des Drehratensensors erfaßten Drehrate beschreibt, eine Amplitudengröße, die die Amplitude der Signalgröße beschreibt, eine Frequenzgröße, die die Frequenz der Signalgröße beschreibt und eine Phasengröße, die die Phase der Signalgröße beschreibt, ermittelt.

Zusammengefaßt läßt sich festhalten: Die Amplitudengröße, die Frequenzgröße und die Phasengröße werden aus der Signalgröße mit Hilfe einer Schwingungsfrequenzanalyse ermittelt.

Aus diesen drei vorstehend genannten Größen kann abgeleitet werden ob, und wenn ja, wie ein stabilisierender Eingriff erfolgen soll.

Hierzu wird zunächst ermittelt, ob eine kritische Schlingerbewegung des Straßenfahrzeuges vorliegt, d.h. ob eine oszillierende Bewegung bzw. eine Pendelbewegung vorliegt, die für das Straßenfahrzeug kritisch ist. Dies erfolgt durch Auswertung der Amplitudengröße und der Frequenzgröße.

In einem ersten Schritt wird mit Hilfe der Frequenzgröße ermittelt, ob die Schlingerbewegung eine Schwingung aufweist, die in einem relevanten Frequenzbereich, der für Personenkraftwagen durch den Bereich von 0,5 bis 3 Hertz definiert ist, liegt. Hierzu wird überprüft, ob der Wert der Frequenzgröße in einem vorgegebenen Wertebereich liegt. Die Grenzen dieses Wertebereiches entsprechen vorteilhafterweise den vorstehend angegebenen. Dieser Vorgehensweise liegt die Tatsache zugrunde, daß für das Straßenfahrzeug kritische Schlingerbewegungen bzw. Pendelbewegungen bzw. Schwingungen charakteristische Frequenzen aufweisen, die in einem definierten Frequenzbereich liegen.

In einem zweiten Schritt wird die Amplitudengröße ausgewertet. Hierbei wird ermittelt, ob die vorliegende Schlingerbewegung für das Fahrzeug überhaupt gefährlich ist und deshalb ein Eingriff zum Stabilisieren erforderlich ist. Hierzu wird der Wert der Amplitudengröße mit einem vorgegebenen Wert verglichen. Ist der Wert der Amplitudengröße größer als der vorgegebene Wert, dann ist die vorliegende Schlingerbewegung für das Fahrzeug gefährlich und es ist ein Eingriff zum Stabilisieren des Fahrzeuges erforderlich. Hintergrund für diese Abfrage ist folgendes: Eine Schlingerbewegung, die eine kleine Amplitude aufweist, stellt für gewöhnlich für das Fahrzeug keine Gefahr dar. Erst wenn eine große Anplitude vorliegt, ist von einer Gefahr für das Fahrzeug auszugehen.

Wird in den ersten beiden Schritten festgestellt, daß der Wert der Frequenzgröße in dem vorgegebenen Frequenzbereich liegt und daß der Wert der Amplitudengröße größer als der vorgegebene Wert ist, so liegt eine Schlingerbewegung vor, die für das Fahrzeug kritisch ist. D.h. es liegt eine Fahrsituation für das Fahrzeug vor, in der ein stabilisierender Eingriff erforderlich ist.

Nachdem erkannt wurde, daß ein stabilisierender Eingriff erforderlich ist, wird in einem dritten Schritt ermittelt, wie dieser Eingriff zu erfolgen hat. In Abhängigkeit der Frequenzgröße und der Phasengröße wird deshalb ein Zeitpunkt ermittelt, zu dem ein phasenrichtiger stabilisierender Eingriff zur Stabilisierung des Straßenfahrzeuges durchgeführt wird. Bei diesem stabilisierenden Eingriff handelt es sich um einen Bremseneingriff und/oder um einen Lenkungseingriff.

Dieser Vorgehensweise liegt folgende Überlegung zugrunde: Um eine Schlingerbewegung schnellst- und bestmöglichst zu beseitigen, benötigt man eine Information darüber, in welche Richtung sich das Fahrzeug im Zeitpunkt der Betrachtung bewegt. Diese Information erhält man durch die Phasengröße. D.h. die Phasengröße gibt an, in welcher Phase der Schlingerbewegung bzw. Pendelbewegung bzw. Schwingung sich das Fahrzeug bezogen auf den Zeitpunkt der Betrachtung befindet. Somit hat man die Möglichkeit gezielt einzugreifen, beispielsweise das Fahrzeug nur rechts zu bremsen, wenn aufgrund der Information der Phasengröße festgestellt werden kann, daß das Fahrzeug gleich oder unmittelbar demnächst nach links schleudert.

Durch Auswertung der Phasengröße und der Frequenzgröße hat man folglich die Möglichkeit, durch gezielte Eingriffe das Fahrzeuges zu stabilisieren. D.h. es kann zur Stabilisierung des Fahrzeuges solch ein Bremseneingriff durchgeführt werden, daß durch diesen ein Moment auf das Fahrzeug aufgebracht wird, welches der Schlingerbewegung bzw. der Pendelbewegung bzw. der Schwingung entgegenwirkt.

Die Auswertung der Phasengröße und der Frequenzgröße bietet aber auch die Möglichkeit, vorausschauend einzugreifen. In Abhängigkeit der Phasengröße und der Frequenzgröße kann man bezogen auf den Zeitpunkt der Auswertung, die Zeitdauer ermitteln, die vergeht, bis das nächste Maximum der Schlingerbewegung bzw. Pendelbewegung bzw. Schwingung und somit der Drehrate vorliegt. Aufgrund dieser Information kann man zum genau richtigen Moment eingreifen, selbst dann, wenn die Bremse eine gewisse Ansprechzeit hat. D.h. bei Anwendung dieser Vorgehensweise lassen sich auch die Ansprechzeiten der Bremsen kompensieren. Somit ist es beispielsweise möglich, bezogen auf die Schlingerbewegung um 90° verschobene Stabilisierungseingriffe durchzuführen.

Hierdurch wäre es zur Stabilisierung des Fahrzeuges möglich, eine um 90° verschobene retardierende Schwingung auf die Lenkung aufzumodulieren, und zwar mit einer minimalen, für den Fahrer kaum spürbaren Amplitude, die jedoch dämpfend wirkt.

Zusammengefaßt läßt sich festhalten: Man hat mit der Phase zusammen mit der Kreisfrequenz nicht nur die Möglichkeit, gezielt einzugreifen, sondern man kann die Bewegung auch in die Zukunft extrapolieren und somit vorausschauend eingreifen. Dieses vorausschauende Eingreifen bietet sich sowohl für die Durchführung von Bremseneingriffen als auch für die Durchführung von Lenkungseingriffen an. Diese Eingriffe können entweder in Alleinstellung oder in Kombination ausgeführt werden.

Damit ein Einsatz des erfindungsgemäßen Verfahrens bzw. der erfindungsgemäßen Vorrichtung im Fahrzeug realisierbar ist, müssen folgende Leistungsmerkmale erfüllt sein:

Der Algorithmus muß stabil und robust gegen einzelne Meßfehler sein. Bei Uneindeutigkeit muß eine Dämpfung einsetzen und der Algorithmus darf sich nicht aufschaukeln.

Der Algorithmus muß eine kontinuierliche Meßgröße zur Entscheidungsfindung liefern, so dass z.B. 30 bis 50 mal pro Sekunde das Ergebnis aktualisiert wird. Die Schwingung muß also mit 30 bis 50 Hz immer neu analysiert werden, wodurch die klassische Fourriertransformierte als Auswerteverfahren ausscheidet oder erheblich beschleunigt werden muß. Eine Abschätzung ergab, dass ein 4 MHz Mikrocontroller bereits ausreicht, um die Rechenleistung zu bewältigen.

Handelt es sich bei dem Straßenfahrzeug um ein Fahrzeuggespann, so kann für die stabilisierenden Eingriffe in die Bremsen folgendes festgehalten werden: Die phasenrichtigen Bremseneingriffe werden an den Bremsen des Zugfahrzeuges durchgeführt. Die Bremen des Anhängers werden bei vorliegen einer Schlingerbewegung gleichmäßig gebremst.

Es ist auch folgende Vorgehensweise denkbar: Wenn erkannt wird, daß eine Schlingerbewegung vorliegt, dann gezielt nur der Anhänger gebremst. Dieser Eingriff muß dann nicht mehr pahsenrichtig erfolgen, sondern es reicht aus, wenn bei einem besipielsweise druckluftgebremsten Anhänger die Bremsen des Anhängers gleichmäßig betätigt werden, d.h. alle Bremsen so betätigt werden, daß sie im wesentlichen die gleiche Bremswirkung erzielen. Durch diese Maßnahme wird das Fahrzeuggespann gestreckt und das Schlingern gedämpft. Bei diesem Konzept kann eine mit dem erfindungsgemäßen Verfahren ausgestattete Zugmaschine mit einem konventionellen Anhänger zusammen betrieben werden.

Im folgenden wird auf die einzelnen Figuren eingegangen.

Die in den Figuren dargestellten Diagramme wurden wie folgt erzeugt. Bei fünf verschiedenen Fahrten mit einem Fahrzeug wurde jeweils die Drehrate aufgezeichnet, d.h. es wurde bei jeder Fahrt ein Datensatz für die Drehrate erzeugt. Zwei dieser Fahrten wurden mit einem Einzelfahrzeug, d.h. einem Fahrzeug ohne Anhänger, und drei dieser Fahrten mit einem Fahrzeuggespann, in diesem Fall einem Personenkraftwagen mit Anhänger, durchgeführt. Der einzelnen zeitlichen Verläufe dieser insgesamt fünf Datensätze sind in Figur 1 dargestellt. Die Kurven 1a und 2a stellen Fahrten mit einem Einzelfahrzeug und die Kurven 1b, 2b und 3b Fahrten mit einem Fahrzeuggespann dar. Wie man erkennen kann, weisen die Kurven, die bei Fahrten mit einem Fahrzeuggespann aufgenommen worden sind, jeweils ab einem bestimmten Zeitpunkt ein periodisches Verhalten auf, was auf eine vorliegende Schlingerbewegung bzw. Pendelbewegung hindeutet.

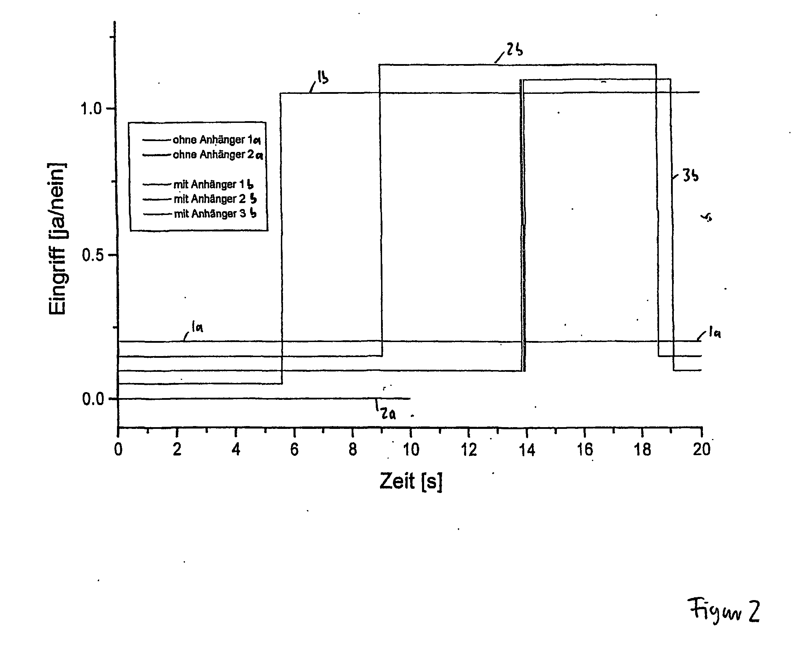

Die bei den fünf Fahrten generierten Datensätze wurden mit Hilfe des erfindungsgemäßen Verfahrens ausgewertet. Hierzu wurden die einzelnen Datensätze in die erfindungsgemäße Vorrichtung eingelesen und auf die Daten der einzelnen Datensätze das vorstehend beschriebene erfindungsgemäße Verfahren angewendet. D.h. es wurde ausgehend von der Signalgröße, die den zeitlichen Verlauf der Drehrate des Straßenfahrzeuges beschreibt, eine Amplitudengröße, eine Frequenzgröße und eine Phasengröße ermittelt. Anhand dieser drei Größen wurde dann mit Hilfe des erfindungsgemäßen Verfahrens ermittelt, ob eine Schlingerbewegung vorliegt und ob ein stabilisierender Eingriff erforderlich ist. Das Ergebnis dieser Auswertungen ist in Figur 2 dargestellt.

Figur 2 zeigt für jeden der fünf Datensätze den zeitlichen Verlauf einer mit Hilfe des erfindungsgemäßen Verfahrens erzeugten Eingriffsgröße. Anhand der Kurven 1a und 2a erkennt man, daß für die Fahrten ohne Anhänger kein stabilisierender Eingriff erforderlich ist. Dagegen zeigen die Kurven 1b, 2b und 3b, daß bei den Fahrten mit Anhänger, ab einem bestimmten Zeitpunkt ein stabilisierender Eingriff erforderlich ist. Ein Ergebnis dieser Auswertung ist: Ohne Kenntnis, ob ein Anhänger vorhanden ist oder nicht, wird ein Eingriff nur bei Fahrten mit Anhänger veranlaßt. Dies deshalb, da nur die Datensätze, die bei Fahrten mit einem Anhänger generiert wurden, ab einem bestimmten Zeitpunkt ein periodisches Verhalten zeigen.

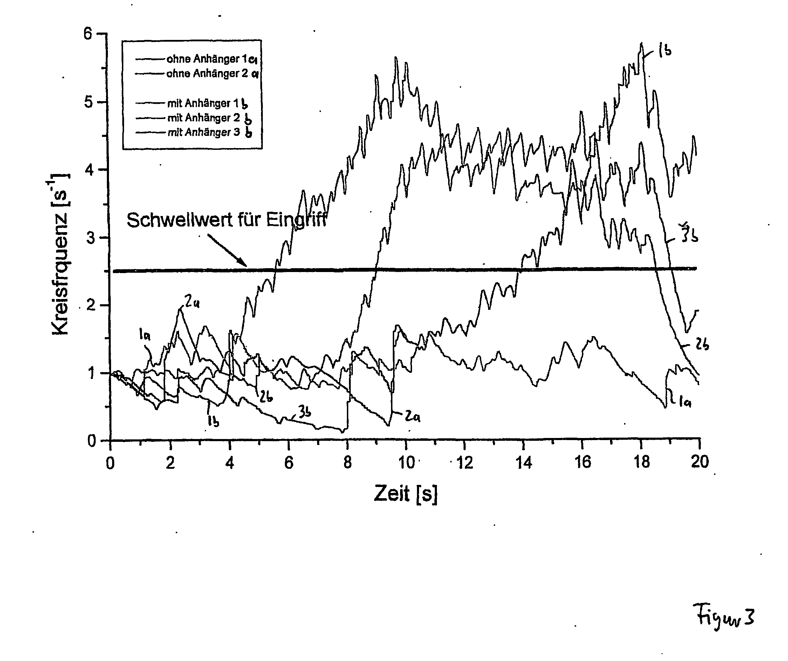

Dies wird durch die in Figur 3 dargestellten Kurven bestätigt. Diese Kurven zeigen den zeitlichen Verlauf der für den jeweiligen Datensatz ermittelten Frequenzgröße. Wie man erkennen kann, überschreitet die Frequenzgröße, die jeweils für die Fahrten ohne Anhänger ermittelt wurde, den Schwellenwert, ab dem ein Eingriff erforderlich ist, nicht. Dagegen überschreitet die Frequenzgröße, die für die jeweiligen Fahrten mit Anhänger ermittelt wurde, ab einem bestimmten Zeitpunkt den Schwellenwert, folglich ist ab diesem Zeitpunkt ein Eingriff erforderlich. Dies entspricht der Darstellung in Figur 2.

In Figur 3 ist mit Blick auf die Ermittlung der Eingriffsgröße lediglich die Auswertung der Frequenzgröße dargestellt. D.h. gemäß dieser Darstellung wird die Notwendigkeit eines stabilisierenden Eingriffs nur in Abhängigkeit der Frequenzgröße ermittelt. Es empfiehlt sich jedoch, zusätzlich zur Auswertung der Frequenzgröße auch noch die Amplitudengröße auszuwerten. Durch diese zusätzliche Auswertung kann ermittelt werden, ob die Schlingerbewegung überhaupt solch eine Amplitude aufweist, bei der davon auszugehen ist, daß eine Gefahr für das Fahrzeug besteht. Mit anderen Worten: Durch die zusätzliche Auswertung der Amplitudengröße können eventuell Eingriffe vermieden werden, die bei alleiniger Auswertung der Frequenzgröße durchgeführt werden würden.

An dieser Stelle sei bemerkt, daß in Figur 3 anstelle der Frequenz, die Kreisfrequenz, die als ω = 2π*f* definiert ist, dargestellt ist.

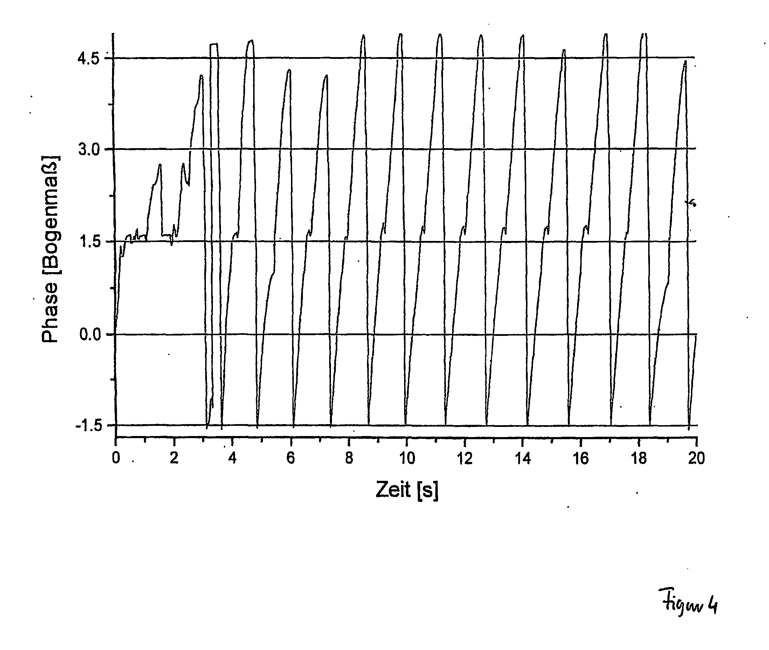

In Figur 4 ist die Phasengröße für den Datensatz 1b dargestellt.

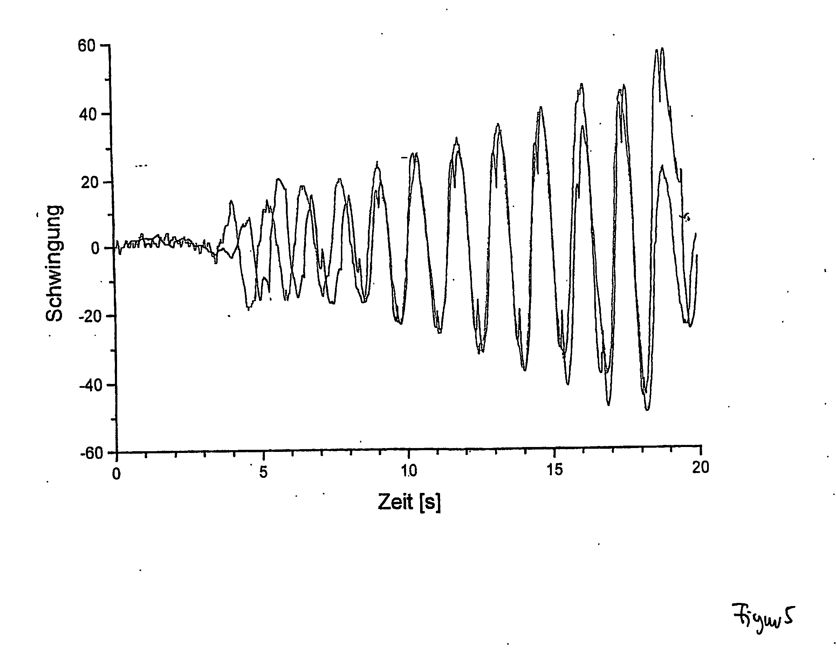

Durch Anwendung des erfindungsgemäßen Verfahrens ist die jeweils vorliegende Kreisfrequenz, durch die Frequenzgröße repräsentiert, und die Phase, durch die Phasengröße repräsentiert, bekannt. Mit Hilfe dieser Größen kann man die Schwingung in die Zukunft extrapolieren. Diese Möglichkeit ist für den Datensatz 1b in Figur 5 dargestellt.

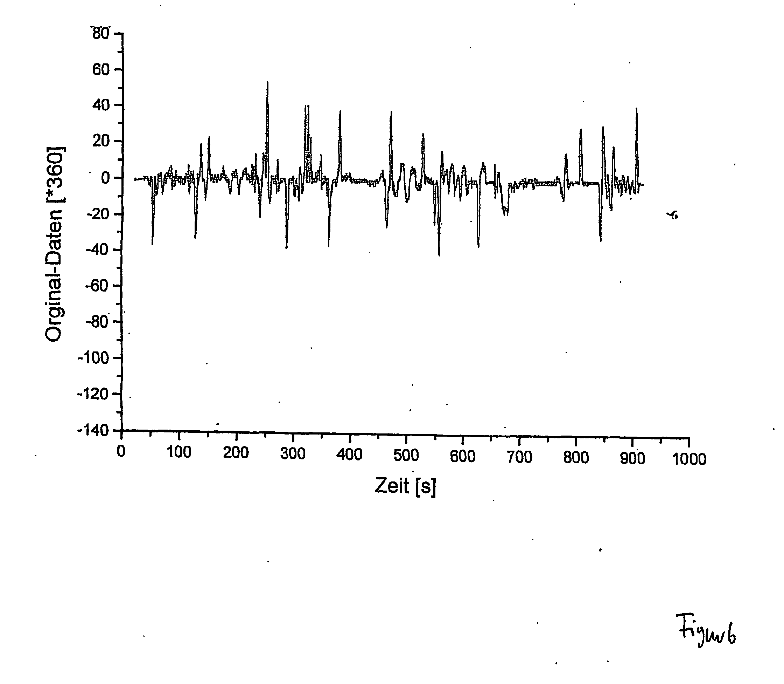

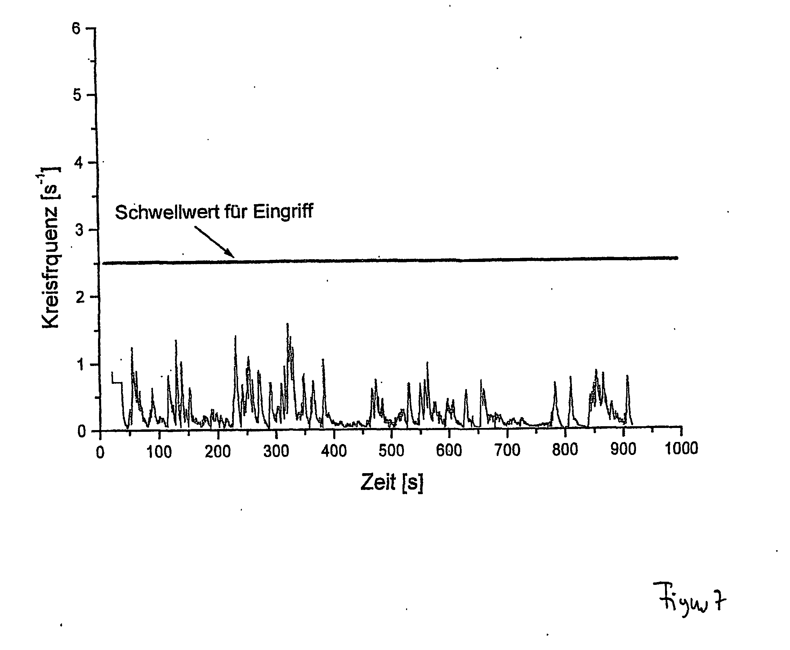

Figur 6 zeigt die während einer Fahrt ohne Anhänger aufgenommene Drehrate. Um das erfindungsgemäße Verfahren zu testen, wurde eine kurvenreiche Strecke, auf der hohe Kurvengeschwindigkeiten erzielt wurden, ausgewählt. Wie bereits vorstehend anhand der fünf Datensätze dargelegt, darf das erfindungsgemäße Verfahren bei dieser Fahrt kein Eingriffssignal erzeugen. Dies wird durch die Darstellung in Figur 7 bestätigt.

## Patentansprüche (Patentansprüche für folgende(n) Vertragsstaat(en): DE, FR, SE, IT)

1. Verfahren zum Stabilisieren eines Straßenfahrzeugs, insbesondere eines aus einem Zugfahrzeug und einem Anhänger bestehenden Fahrzeuggespannes,
- bei dem eine Signalgröße ermittelt wird, die den zeitlichen Verlauf der mit Hilfe eines Drehratensensors erfaßten Drehrate des Straßenfahrzeuges beschreibt,
- bei dem eine Amplitudengröße ermittelt wird, die die Amplitude der Signalgröße beschreibt,
- bei dem eine Frequenzgröße ennittelt wird, die die Frequenz der Signalgröße beschreibt,
- bei dem in Abhängigkeit der Amplitudengröße und der Frequenzgröße ermittelt wird, ob eine Schlingerbewegung des Fahrzeugs vorliegt, **dadurch gekennzeichnet, daß**
- die Schlingerbewegung des Fahrzeugs dann vorliegt, wenn der Wert der Frequenzgröße in einem vorgegebenen Wertebereich zwischen 0.5 Hz und 3 Hz liegt,
- eine Phasengröße ermittelt wird, die die Phase der Signalgröße beschreibt, und
- bei Vorliegen einer Schlingerbewegung in Abhängigkeit der Frequenzgröße und der Phasengröße die Zeitdauer ermittelt wird, die vergeht, bis das nächste Maximum der Schlingerbewegung bzw. Pendelbewegung bzw. Schwingung und somit der Drehrate vorliegt und abhängig davon ein phasenrichtiger Bremseneingriff oder Lenkungseingriff zur Stabilisierung des Straßenfahrzeuges durchgeführt wird.

2. Verfahren nach Anspruch 1, **dadurch gekennzeichnet,**
**daß** die Schlingerbewegung des Straßenfahrzeuges dann vorliegt, wenn der Wert der Frequenzgröße in einem vorgegebenen Wertebereich liegt oder größer als ein vorgegebener Wert ist, und/oder wenn der Wert der Amplitudengröße größer als ein vorgegebener Wert ist.

3. Verfahren nach Anspruch 1, **dadurch gekennzeichnet,**
**daß** die Amplitudengröße, die Frequenzgröße und die Phasengröße aus der Signalgröße mit Hilfe einer Schwingungsfrequenzanalyse ermittelt wird.

4. Verfahren nach Anspruch 1, **dadurch gekennzeichnet,**
**daß** bei einem Fahrzeuggespann die phasenrichtigen Bremseneingriffe an den Bremsen des Zugfahrzeuges durchgeführt werden.

5. Verfahren nach Anspruch 1, **dadurch gekennzeichnet,**
**daß** für ein Fahrzeuggespann bei vorliegen einer Schlingerbewegung die Bremen des Anhängers gleichmäßig gebremst werden.

6. Vorrichtung mit einem Algorithmus der das Verfahren nach Anspruch 1 ausführt.

## Patentansprüche (Patentansprüche für folgende(n) Vertragsstaat(en): GB)

1. Verfahren zum Stabilisieren eines Straßenfahrzeugs, insbesondere eines aus einem Zugfahrzeug und einem Anhänger bestehenden Fahrzeuggespannes,
bei dem eine Signalgröße ermittelt wird, die den zeitlichen Verlauf der mit Hilfe eines Drehratensensors erfaßten Drehrate des Straßenfahrzeuges beschreibt,
bei dem eine Amplitudengröße ermittelt wird, die die Amplitude der Signalgröße beschreibt,
bei dem eine Frequenzgröße ermittelt wird, die die Frequenz der Signalgröße beschreibt,
bei dem in Abhängigkeit der Amplitudengröße und der Frequenzgröße ermittelt wird, ob eine Schlingerbewegung des Fahrzeugs vorliegt,
**dadurch gekennzeichnet,**
**daß** eine Phasengröße ermittelt wird, die die Phase der Signalgröße beschreibt, und
**daß** bei Vorliegen einer Schlingerbewegung in Abhängigkeit der Frequenzgröße und der Phasengröße ein Zeitpunkt ermittelt wird, zu dem ein phasenrichtiger Bremseneingriff oder Lenkungseingriff zur Stabilisierung des Straßenfahrzeuges durchgeführt wird.

2. Verfahren nach Anspruch 1, **dadurch gekennzeichnet,**
**daß** die Schlingerbewegung des Straßenfahrzeuges dann vorliegt, wenn der Wert der Frequenzgröße in einem vorgegebenen Wertebereich liegt oder größer als ein vorgegebener Wert ist, und/oder wenn der Wert der Amplitudengröße größer als ein vorgegebener Wert ist.

3. Verfahren nach Anspruch 1, **dadurch gekennzeichnet,**
**daß** die Amplitudengröße, die Frequenzgröße und die Phasengröße aus der Signalgröße mit Hilfe einer Schwingungsfrequenzanalyse ermittelt wird.

4. Verfahren nach Anspruch 1, **dadurch gekennzeichnet,**
**daß** bei einem Fahrzeuggespann die phasenrichtigen Bremseneingriffe an den Bremsen des Zugfahrzeuges durchgeführt werden.

5. Verfahren nach Anspruch 1, **dadurch gekennzeichnet,**
**daß** für ein Fahrzeuggespann bei vorliegen einer Schlingerbewegung die Bremen des Anhängers gleichmäßig gebremst werden.

6. Vorrichtung mit einem Algoritmus der das Verfahren nach Anspruch 1 ausführt.

## Claims (Claims for the following Contracting State(s): DE, FR, SE, IT)

1. Method for stabilizing a road vehicle, in particular a vehicle combination comprised of a towing vehicle and a trailer,
- in which a signal variable which describes the time profile of the rotational speed of the road vehicle which is sensed using a rotational speed sensor is determined,
- in which an amplitude variable which describes the amplitude of the signal variable is determined,
- in which a frequency variable which describes the frequency of the signal variable is determined,
- in which it is determined, as a function of the amplitude variable and the frequency variable, whether a rolling movement of the vehicle is occurring, **characterized in that**
- the rolling movement of the vehicle is occurring if the value of the frequency variable lies in a predefined value range between 0.5 Hz and 3 Hz,
- a phase variable which describes the phase of the signal variable is determined, and
- if a rolling movement is occurring, the time period which passes until the next maximum value of the rolling movement or oscillating movement or vibration and thus the rotational speed occurs is determined as a function of the frequency variable and the phase variable, and as a function thereof a correctly phased braking intervention or steering intervention is carried out in order to stabilize the road vehicle.

2. Method according to Claim 1, **characterized in that** the rolling movement of the road vehicle is occurring if the value of the frequency variable lies in a predefined value range or is higher than a predefined value and/or if the value of the amplitude variable is higher than a predefined value.

3. Method according to Claim 1, **characterized in that** the amplitude variable, the frequency variable and the phase variable are determined from the signal variable using a vibration frequency analysis.

4. Method according to Claim 1, **characterized in that** in the case of a vehicle combination the correctly phased braking interventions are carried out at the brakes of the towing vehicle.

5. Method according to Claim 1, **characterized in that** the brakes of the trailer are braked to an equal extent for a vehicle combination when a rolling movement is occurring.

6. Device having an algorithm which carries out the method according to Claim 1.

## Claims (Claims for the following Contracting State(s): GB)

1. Method for stabilizing a road vehicle, in particular a vehicle combination comprised of a towing vehicle and a trailer,
in which a signal variable which describes the time profile of the rotational speed of the road vehicle which is sensed using a rotational speed sensor is determined,
in which an amplitude variable which describes the amplitude of the signal variable is determined,
in which a frequency variable which describes the frequency of the signal variable is determined,
in which it is determined, as a function of the amplitude variable and the frequency variable, whether a rolling movement of the vehicle is occurring,
**characterized in that**
a phase variable which describes the phase of the signal variable is determined, and
**in that**, if a rolling movement is occurring, a time at which a correctly phased braking intervention or steering intervention is carried out in order to stabilize the road vehicle is determined as a function of the frequency variable and the phase variable.

2. Method according to Claim 1, **characterized in that** the rolling movement of the road vehicle is occurring if the value of the frequency variable lies in a predefined value range or is higher than a predefined value and/or if the value of the amplitude variable is higher than a predefined value.

3. Method according to Claim 1, **characterized in that** the amplitude variable, the frequency variable and the phase variable are determined from the signal variable using a vibration frequency analysis.

4. Method according to Claim 1, **characterized in that** in the case of a vehicle combination the correctly phased braking interventions are carried out at the brakes of the towing vehicle.

5. Method according to Claim 1, **characterized in that** the brakes of the trailer are braked to an equal extent for a vehicle combination when a rolling movement is occurring.

6. Device having an algorithm which carries out the method according to Claim 1.

## Revendications (Revendications pour l'(les) Etat(s) contractant(s) suivant(s): DE, FR, SE, IT)

1. Procédé de stabilisation d'un véhicule routier, notamment d'un train routier formé d'un véhicule tracteur et d'une remorque, selon lequel
- on détermine une grandeur de signal décrivant l'évolution chronologique de la vitesse de lacet du véhicule routier saisie par un capteur de vitesse de lacet,
- on détermine une grandeur d'amplitude décrivant l'amplitude de la grandeur du signal,
- on détermine une grandeur de fréquence qui décrit la fréquence de la grandeur du signal,
- en fonction de la grandeur de l'amplitude et de la grandeur de la fréquence on détermine si le véhicule subit un mouvement de lacet,
**caractérisé en ce qu'**
- il y a mouvement de lacet du véhicule si la valeur de la grandeur de fréquence se situe dans une plage prédéfinie comprise entre 0,5 Hz et 3 Hz,
- on détermine une grandeur de phase qui décrit la phase de la grandeur du signal et
- en cas de mouvement de lacet, en fonction de la grandeur de la fréquence et de la grandeur de la phase on détermine la durée jusqu'au maximum suivant du mouvement de lacet ou du mouvement pendulaire ou de l'oscillation et ainsi la vitesse de lacet, et en fonction de cela on exécute une action de freinage correcte en phase ou une action de braquage pour stabiliser le véhicule routier.

2. Procédé selon la revendication 1,
**caractérisé en ce qu'**
il y a mouvement de lacet du véhicule routier si la valeur de la grandeur de la fréquence se situe dans une plage prédéfinie ou est supérieure à une valeur prédéfinie et/ ou si la valeur de la grandeur de l'amplitude est supérieure à une valeur prédéterminée.

3. Procédé selon la revendication 1,
**caractérisé en ce que**
la grandeur de l'amplitude, la grandeur de la fréquence et la grandeur de la phase se déterminent à partir de la grandeur du signal par une analyse de la fréquence d'oscillations.

4. Procédé selon la revendication 1,
**caractérisé en ce que**
dans le cas d'un train routier on exécute les actions de freinage en phase sur les freins du véhicule tracteur.

5. Procédé selon la revendication 1,
**caractérisé en ce que**
dans le cas d'un train routier, en cas de mouvement de lacet on freine régulièrement les freins de la remorque.

6. Dispositif comportant un algorithme qui exécute le procédé de la revendication 1.

## Revendications (Revendications pour l'(les) Etat(s) contractant(s) suivant(s): GB)

1. Procédé de stabilisation d'un véhicule routier, notamment d'un train routier formé d'un véhicule tracteur et d'une remorque, selon lequel
- on détermine une grandeur de signal décrivant l'évolution chronologique de la vitesse de lacet du véhicule routier, saisie par un capteur de vitesse de lacet,
- on détermine une grandeur d'amplitude décrivant l'amplitude de la grandeur du signal,
- on détermine une grandeur de fréquence qui décrit la fréquence de la grandeur du signal,
- en fonction de la grandeur de l'amplitude et de la grandeur de la fréquence on détermine si le véhicule subit un mouvement de lacet,
**caractérisé en ce qu'**
- on détermine une grandeur de phase qui décrit la phase de la grandeur du signal et
- en cas de mouvement de lacet, en fonction de la grandeur de la fréquence et de la grandeur de la phase, on détermine un instant auquel on exécute une action de freinage correcte en phase ou une action de braquage pour stabiliser le véhicule routier.

2. Procédé selon la revendication 1,
**caractérisé en ce que**
le véhicule routier effectue des mouvements de lacet si la valeur de la grandeur de fréquence se situe dans une plage de valeur prédéfinie ou est supérieure à une valeur prédéfinie et/ou si la valeur de la grandeur d'amplitude est supérieure à une valeur prédéfinie.

3. Procédé selon la revendication 1,
**caractérisé en ce qu'**
on détermine la grandeur d'amplitude, la grandeur de fréquence et la grandeur de phase à partir de la grandeur du signal par une analyse de la fréquence d'oscillations.

4. Procédé selon la revendication 1,
**caractérisé en ce que**
dans le cas d'un train routier on effectue les actions de freinage en phase sur les freins du véhicule tracteur.

5. Procédé selon la revendication 1,
**caractérisé en ce que**
dans le cas d'un train routier en cas de mouvement de lacet on freine régulièrement les freins de la remorque.

6. Dispositif comportant un algorithme pour exécuter le procédé selon la revendication 1.
